# EUROPEAN PATENT APPLICATION

(11) **EP 0 886 423 A1**
(43) Date of publication of application: **23.12.1998**
(21) Application number: 98202022.4
(22) Date of filing: 17.06.1998
(51) Int. Cl.: H04M 3/32, H04M 3/30, H04M 3/36

(54) **Device and method for testing the reachability of at least one user of a telecommunication network**

(30) Priority: 20.06.1997 NL 1006371
(71) Applicant: Koninklijke KPN N.V., 9726 AE Groningen (NL)
(72) Inventor: Koelma, Franz, c/o KPN Research, 2264 XZ Leidschendam (NL)

(57) **Abstract**

A device (10) for testing the reachability of users connected to a telecommunication network is described. Said device (10) comprises calling means (14, 16, 22) for automatically calling the users. A message for the user is subsequently automatically generated by message generating means (24), indicating that a reachability test is being carried out and containing instructions for generating a response signal by the user. Detection means (26) subsequently detect whether the response signal is generated. If this is the case, the tested user is reachable and the test is terminated. If the response signal is not generated, the test can be repeated. If the user is not reachable for a number of times in sequence, an alarm signal is generated.

## Description

### A. Background of the invention

For users of a telecommunication network it is important to be reachable. This applies certainly for business users such as companies, which, in order to order to perform well, are dependent upon the correct functioning of their own telecommunication equipment and of the telecommunication network to which they are connected.

Sometimes, however, there are failures in the telecommunication network or in the equipment of the users themselves, whereby the users are not reachable. In most of the failure cases, the user himself discovers that he is not reachable and notifies the operator of the telecommunication network accordingly. Often, however, this is already some time after the failure has started, many calls, for example from important customers, already being lost. In the perception of the users, it is furthermore a bad thing that they must report failures to the network operator themselves.

There may also be other causes, however, for a user not being reachable. It is possible, for example, that a user does not have enough lines available to process the incoming traffic volume on his number, or that the personnel of a user does not answer calls or does not answer them in time.

### B. Summary of the invention

It is therefore an objective of the invention to be able to determine the non-reachability of a user at an early stage. To this end, the invention provides a device for testing the reachability of at least one user of a telecommunication network, said device comprising calling means for the calls of the user and said device comprising detection means for detecting a response signal which is to be generated by the user. The user must therefore answer the call of the device according to the invention and indicate that he is reachable by generating a response signal. With the device according to the invention, the non-reachability of the user can be determined in the event that there is a failure in the telecommunication network as well as in the event that there is a failure in the equipment of the user, but also in other cases, for example in the event that the number of lines of the user is not adequate for processing the incoming traffic volume on his number, of in the event that the user is a company which has personnel that does not answer incoming calls or does not answer them in time. The device according to the invention is preferably used by the network operator to test the reachability of users connected to his telecommunication network who have indicated a need for such a reachability test. By using the device, the operator is quickly informed of a problem, and, if the problem is located within the telecommunication network, can try to solve the problem before the user notices it. If the problem cannot be solved quickly, or if the problem is user-located, the network operator can inform the user of the problem himself, which is very customer-friendly.

A first embodiment of the device according to the invention, is characterised in that the calling means are arranged for calling the user again if a response signal is not detected for a call. By repeating the test it is avoided, for example, that a user, who is absent for a short time or is engaged and therefore does not answer the first call immediately, receives the status not reachable. The user is preferably not called again immediately after not answering of the first call, but some time later, for example after a quarter of an hour or half an hour.

A second embodiment of the device according to the invention is characterised in that the device comprises counting means for incrementing a counter value if a response signal is not detected for a call, and that the device comprises comparison means for comparing the counter value with met a limiting value, said comparison means being arranged for emitting an alarm signal if the counter value is equal to the limiting value. According to this embodiment, an alarm signal is not emitted until the user was not reachable for a number of times in sequence. The magnitude of this number of times is determined by the choice of the limiting value. On the occurrence of an alarm signal, a facsimile message, for example, is automatically sent or an automatic call is placed to a fault-clearing service of the network operator which can possibly solve the problem.

A third embodiment of the device according to the invention is characterised in that the device is provided with message generating means for generating a message for the user. The message contains, for example, an announcement stating that a reachability test is being performed and instructions for generating the response signal by the user.

A fourth embodiment of the device according to the invention is characterised in that the detection means comprise DTMF tone recognition means for detecting the response signal of the user. In this case, the response signal is formed by one or more DTMF tones and the user can generate the response signal by means DTMF keys on his telephone set.

A fifth embodiment of the device according to the invention is characterised in that the detection means comprise speech recognition means for detecting the response signal of the user. In this case, the response signal is formed by speech and the user can simply generate the response signal by uttering a certain word or a certain sentence.

The invention is further related to a method for testing the reachability of at least one user of a telecommunication network, comprising the following steps:
calling the user, and
- detecting whether a response signal is generated.

In the European patent application EP 0 710 045 Al, a system for testing connections in a telecommunication network is shown. The system comprises a testing device and an answering device. In order to test the routing in the network, the testing device establishes a connection with the answering device. The answering device subsequently sends back an identification code, which is compared in the testing device with an expected identification code. If said identification codes correspond, the routing in the network is in order. Thus, in the system which is described in said patent application, the reachability of a user of the network is not tested.

### C. References

EP 0 710 045 A1

### D. Exemplary embodiment

The invention will be further explained on the basis of an exemplary embodiment shown in the figures. In this regard:
Fig. 1 shows an exemplary embodiment of the device according to the invention, and
Fig. 2 shows a flowchart of the operation of the device shown in Fig. 1.

In the figures, only those parts are shown which are relevant for understanding the invention.

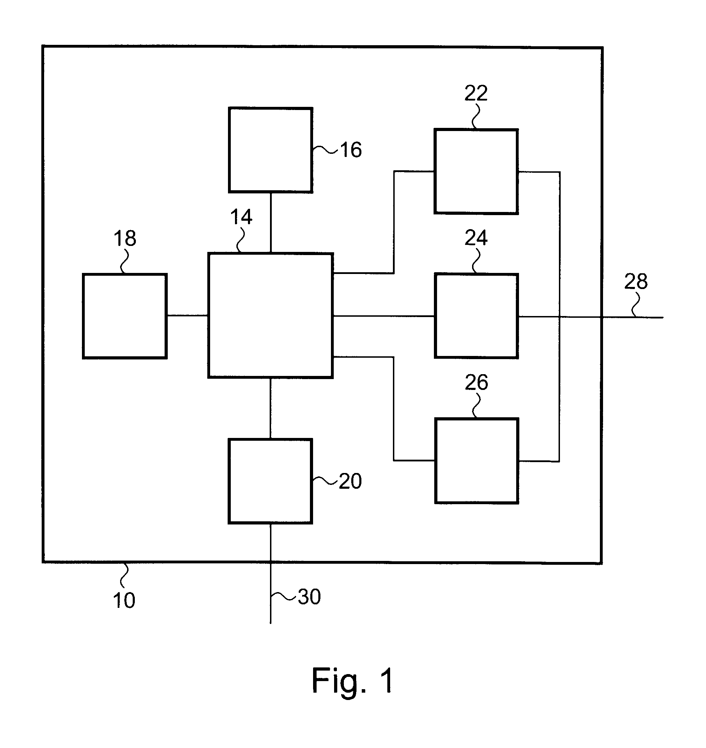

In Fig. 1, a device 10 is shown for testing the reachability of users of a telecommunication network. Said device 10 is connected to the telecommunication network (not shown ) by means of a telephone line 28. Said device 10 comprises a processor 14 having a working memory (not separately shown). A first memory 16, in which numbers of the users to be tested are stored, is connected to said processor 14. A second memory 18, in which data on the reachability of the users are stored, is further connected to said processor 14. Said device 10 further comprises dialling means 22 ("dial out"), speech generating means 24 and detection means 26. Said dialling means 22, speech generating means 24 and detection means 26 are all connected to the telephone line 28. Said dialling means 22, speech generating means 24 and detection means 26 are commercially available components known per se. A commercially available product in which all these components are present is, for example, a voice response board of the brand DIALOGIC, from DIALOGIC CORPORATION. Said processor 14 is still further connected to a facsimile device 20, which is connected to a further telephone line 30.

Said device 10 according to the invention operates as follows. In the first memory 16, a list is stored of the telephone numbers of the users whose reachability is to be tested. The numbers in the list are in the sequence in which the tests are to take place. Further, for each number in said memory a point in time or time interval in which the test is to take place is also stored. This point in time or time interval is specified by the user related to the number to be tested at the moment he applies for the reachability test. The user can further also indicate how often the reachability test must take place in a given period, such as a dag or a week. For each test which is to be newly carried out, the number of the user is again placed in the list of numbers to be tested. Said processor 14 reads out the number at the top of the list and passes this on to said dialling means 22. These dial the related number via said telephone line 28. Said processor 14, said first memory 16 and said dialling means 22 form collective calling means for calling a user who is to be tested. Said detection means 26 detect whether a connection has been established, and, if this is the case, emit a signal which is indicative of this situation to said processor 14. Subsequently, said processor 14 issues the command to said speech generating means 24 to generate a message for the user. This message is stored in memory which is specifically present in said speech generating means 24 for this purpose. The content of the message can be determined by the operator of said device 10, who is preferably also the network operator. The content of the message is, for example, "This is a reachability test, enter an "0" to indicate that you are reachable". The user then knows that the incoming call is a reachability test and how he should respond to it, namely by pressing the DTMF key "0" on his telephone set. Said detection means 26, which are further suitable for detecting DTMF tones and other tones, such as the busy tone, subsequently detect whether the DTMF tone related to the key "0" is indeed generated. The DTMF tone forms the response signal to be generated by the user. If the DTMF tone is detected, said detection means 26 emit a confirmation signal to said processor 14. The confirmation signal indicates that the user is reachable. Said processor 14 stores the fact that the user is reachable in said second memory 18. Optionally, other data can also be stored in said second memory 18, such as the speed with which the call is answered, etc. A periodic report containing these data can be provided to the user. Said processor 14 subsequently reads out a following telephone number from the list located in said first memory 16, and the process described above is repeated.

If the user is not reachable, this is also detected door said detection means 26. The non-reachability of a user can become apparent in various manners. A first manner is the occurrence of a busy tone. A second manner is the non-occurrence of the response signal to be entered by the user within a certain time interval. Both these situations are detected by said detection means 26. On the occurrence of each of these situations, said detection means 26 emit to said processor 14 a signal which indicates the occurrence of one of the situations. After receiving this signal, said processor 14 knows that the user is not reachable. Said processor 14 maintains a counter value for each user whose reachability is tested. This counter value indicates the number of consecutive times that a user was not reachable. Each time said processor 14, upon executing a reachability test for a given number, receives a signal from said detection means 26 which indicates that the user is not reachable, the counter value related to that number is incremented by one. Said processor 14 subsequently compares the counter value with a limiting value. The limiting value is adjustable and can, for example, be specified by the user at the time he applies for the reachability test. If the counter value is equal to the limiting value, said processor 14 generates an alarm signal. Said alarm signal is applied to the facsimile device 20, which, via said further telephone line 30, automatically transmits a facsimile message to, for example, a fault-clearing service of the network operator, in which the non-reachability of the user is reported. The facsimile message can, of course, also be sent somewhere else, for example to the customer himself. As long as the counter value is not yet equal to the limiting value, the number of the user for whom the reachability test is being carried out is again added to the list located in the first memory 16 by said processor 14. The number is preferably not placed at the top of the list, but somewhat further below, so that the repetition of the reachability test does not take place immediately but only after some time. In the meantime, of course, said device 10 proceeds with the execution of reachability tests of other users. Said processor 14 also writes data relating to unsuccessful reachability tests in said second memory 18. Said data are included in the periodic report for the user.

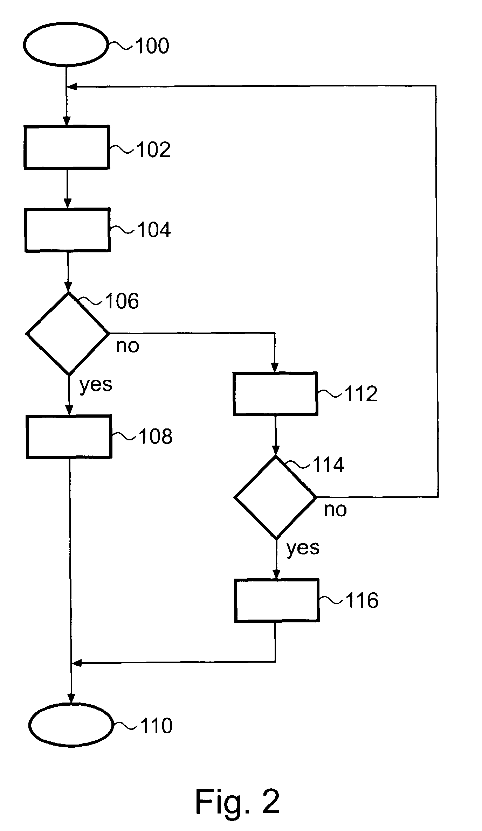

Fig. 2 shows a simplified flowchart of the operation of said device 10. The flowchart displays the most important process steps which are executed when testing the reachability of a user. The steps have the following meaning:
100 START
102 CALL NUMBER
104 GENERATE MESSAGE
106 RESPONSE SIGNAL?
108 COUNTER VALUE := 0
110 STOP
112 COUNTER VALUE := COUNTER VALUE + 1
114 COUNTER VALUE = LIMITING VALUE?
116 ALARM

In step 102, the number of the user to be tested is called. In step 104, a message for the user is generated which contains the announcement that the call is taking place within the framework of a reachability test and instructions for generating the response signal by the user. In step 106, a test is carried out to determine whether a response signal was generated the user. If this is the case, the counter value is subsequently equated to zero in step 108 and the test is terminated. If there no response signal is generated, the counter value is subsequently incremented by one in step 112. Subsequently, in step 114, the counter value is compared with a predetermined limiting value. If the counter value is equal to the limiting value, an alarm signal is generated in step 116. If the counter value is not equal to the limiting value (and is thus smaller), a return is made to step 102 and the reachability test is repeated. As described before, the repetition is preferably carried out some time later.

For executing the steps shown in said flowchart, said processor 14 is loaded with suitable software. Thus, in the exemplary embodiment described, counting means for incrementing the counter value, and comparison means for comparing the counter value with the limiting value, are realised by the processor loaded with software. However, it is also possible of course to have part of the steps shown in Fig. 2, or even all of these steps, executed by suitable hardware components. In that case, the counting means can be realised by a commercially available counter and the comparison means by a commercially available comparator.

The transmission of alarm messages can also take place by other means than by means of said facsimile device 20. Said processor 14 can be equipped, for example, with an e-mail facility for transmitting these messages. Another way of transmitting said alarm messages is by means of a automatic call system. It is possible to use the voice response board already present in said device 10 for this purpose.

Finally, it is also possible to make said detection means 26 suitable not only for recognising tones but also for recognising speech. This gives the user the possibility of generating the response signal by simply uttering a word or a sentence.

It will be clear to those skilled in the art that the invention is not restricted to the embodiments shown, and that many modifications and extensions are possible without departing from the scope of the invention. Thus it is possible to provide said device 10 with several voice response boards, so that several reachability tests can be carried out simultaneously.

## Claims

1. Device for testing the reachability of at least one user of a telecommunication network, said device comprising calling means for calling the user, and said device comprising detection means for detecting a response signal to be generated by the user.

2. Device according to Claim 1, characterised in that said calling means are arranged for calling the user again if no response signal is detected for a call.

3. Device according to Claim 2, characterised in that said device comprises counting means for incrementing a counter value if no response signal is detected for a call, and that said device comprises comparison means for comparing the counter value with a limiting value, said comparison means being arranged for emitting an alarm signal if the counter value is equal to the limiting value.

4. Device according to any of the Claims 1 up to and including 3, characterised in that said device is provided with message generating means for generating a message for the user.

5. Device according to any of the preceding claims, characterised in that the detection means comprise DTMF tone recognition means for detecting the response signal of the user.

6. Device according to any of the Claims 1 up to and including 4, characterised in that the detection means comprise speech recognition means for detecting the response signal of the user.

7. Method for testing the reachability of at least one user of a telecommunication network comprising the following steps:
calling the user, and
- detecting whether a response signal is generated.
